# EUROPÄISCHE PATENTANMELDUNG

(11) **EP 3 413 425 A1**
(43) Veröffentlichungstag der Anmeldung: **12.12.2018**
(21) Anmeldenummer: 18173975.6
(22) Anmeldetag: 24.05.2018
(51) Int. Cl.: H02J 7/00, B60L 11/18, H01M 10/44

(54) **VERFAHREN UND LADEEINHEIT ZUM LADEN EINES ELEKTRISCHEN ENERGIESPEICHERS**

(30) Priorität: 06.06.2017 DE 102017209489
(71) Anmelder: Robert Bosch GmbH, 70442 Stuttgart (DE)
(72) Erfinder: Diekmann, Ralf, 71701 Schwieberdingen (DE)

(57) **Zusammenfassung**

Die Erfindung betrifft ein Verfahren zum Laden eines elektrischen Energiespeichers (1). Ferner betrifft die Erfindung eine Ladeeinheit (2) zum Laden eines elektrischen Energiespeichers (1), aufweisend eine Speichereinheit (3) und eine Kontrolleinheit (4).

## Beschreibung

Die vorliegende Erfindung betrifft ein Verfahren gemäß dem Oberbegriff des unabhängigen Verfahrensanspruchs. Ferner geht die vorliegende Erfindung aus von einer Ladeeinheit nach Gattung des unabhängigen Vorrichtungsanspruchs.

### Stand der Technik

Es ist aus dem Stand der Technik grundsätzlich bekannt, elektrische Energiespeicher, insbesondere wiederaufladbare elektrische Energiespeicher, zu überwachen. Insbesondere ist es bekannt, einen Ladezustand eines derartigen elektrischen Energiespeichers zu kontrollieren. Derartige Verfahren und Vorrichtungen sind bspw. aus der US 2007/0236183 sowie der US 5955869 bekannt. Ferner ist es bekannt, auch bei einem Aufladen des elektrischen Energiespeichers dessen Ladezustand zu überwachen.

### Offenbarung der Erfindung

Gegenstand der Erfindung ist ein Verfahren zum Laden eines elektrischen Energiespeichers mit den Merkmalen des unabhängigen Verfahrensanspruchs sowie eine Ladeeinheit zum Laden eines elektrischen Energiespeichers mit den Merkmalen des unabhängigen Vorrichtungsanspruchs. Weitere Merkmale und Details der Erfindung ergeben sich aus den jeweiligen Unteransprüchen, der Beschreibungen und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Ladeeinheit und jeweils umgekehrt, sodass bzgl. der Offenbarung zu den einzelnen Erfindungsaspekten stets wechselseitig Bezug genommen wird bzw. werden kann.

Gemäß einem ersten Aspekt betrifft die vorliegende Erfindung ein Verfahren zum Laden eines elektrischen Energiespeichers. Ein erfindungsgemäßes Verfahren ist durch folgende Schritte gekennzeichnet:
a) Laden des elektrischen Energiespeichers durch eine Ladeeinheit während einer ersten Ladedauer mit einer ersten Ladeleistung auf einen ersten Ladezustand,
b) Unterbrechen des Ladens des elektrischen Energiespeichers durch die Ladeeinheit nach der ersten Ladedauer für eine Ladepause, und
c) Laden des elektrischen Energiespeichers nach der Ladepause durch die Ladeinheit während der zweiten Ladedauer mit einer zweiten Ladeleistung auf einen zweiten Ladezustand.

Ein erfindungsgemäßes Verfahren ist zum Laden eines elektrischen Energiespeichers vorgesehen. Ein derartiger, elektrischer Energiespeicher, der durch ein erfindungsgemäßes Verfahren aufgeladen werden kann, kann bevorzugt für einen Einsatz in Fahrzeugen, insbesondere in Kraftfahrzeugen, ausgebildet sein. Ferner ist bevorzugt der elektrische Energiespeicher ein wiederaufladbarer elektrischer Energiespeicher. Darüber hinaus handelt es sich bei dem elektrischen Energiespeicher, der durch ein erfindungsgemäßes Verfahren aufgeladen werden kann, besonders bevorzugt um einen Energiespeicher, der auf einer Lithium-Ionen-Technologie (LIT) oder auf einer Post-Lithium-Ionen-Technologie (PLIT) basiert.

In einem ersten Schritt a) eines erfindungsgemäßen Verfahrens wird der elektrische Energiespeicher durch eine Ladeeinheit aufgeladen. Dies wird insbesondere während dieses ersten Schrittes a) derart vorgenommen, dass der elektrische Energiespeicher für eine erste Ladedauer mit einer ersten Ladeleistung auf einen ersten Ladezustand aufgeladen wird. Eine Ladeleistung im Sinne der Erfindung ist insbesondere definiert als eine elektrische Leistung, mit der der elektrische Energiespeicher pro Zeiteinheit aufgeladen wird. Insbesondere ist vorgesehen, dass während des Schrittes a) der elektrische Energiespeicher auf einen ersten Ladezustand aufgeladen wird, der nicht dem maximalen Ladezustand des elektrischen Energiespeichers entspricht. Mit anderen Worten wird der elektrische Energiespeicher während des Schrittes a) eines erfindungsgemäßen Verfahrens nicht vollständig aufgeladen.

Darüber hinaus wird in einem Schritt b), der anschließend an den Schritt a) durchgeführt wird, das Aufladen des elektrischen Energiespeichers durch die Ladeeinheit unterbrochen. Dies wird insbesondere für die Dauer einer Ladepause durchgeführt. Während dieser Ladepause erfolgt somit keine weitere Aufladung des elektrischen Energiespeichers.

Erst im letzten Schritt c) eines erfindungsgemäßen Verfahrens, wird der elektrische Energiespeicher nach Beendigung der Ladepause durch die Ladeeinheit weiter aufgeladen. Dies erfolgt während einer zweiten Ladedauer mit einer zweiten Ladeleistung auf einen zweiten Ladezustand. Der zweite Ladezustand ist insbesondere höher als der erste Ladezustand. Bevorzugt kann der zweite Ladezustand auch dem Maximalladungszustand des elektrischen Energiespeichers entsprechen.

Zusammenfassend wird bei Durchführung eines erfindungsgemäßen Verfahrens der elektrische Energiespeicher in zumindest zwei Stufen aufgeladen. Während einer ersten Stufe wird der elektrische Energiespeicher auf einen ersten Ladezustand und, nach einer Ladepause, in einer zweiten Stufe auf einen zweiten Ladezustand aufgeladen. Durch die Aufteilung des Aufladens des elektrischen Energiespeichers auf mehrere Stufen bzw. Zeitabschnitte, kann bspw. ein Ausnutzen von unterschiedlichen Energiepreisen (die z.B. zeitlich variieren) für den zur Aufladung des Energiespeichers verwendeten Ladestroms ausgenutzt werden. So kann bspw. Schritt a) eines erfindungsgemäßen Verfahrens während einer Zeit ausgeführt werden, in der ein besonders niedriger Energiepreis vorherrscht. Ein besonders kostensparendes Aufladen auf den ersten Ladezustand kann dadurch bereitgestellt werden. Durch ein Vermeiden des Auflades des elektrischen Energiespeichers auf seinen Maximalladungszustand bereits während der ersten Ladedauer kann vermieden werden, dass der elektrische Energiespeicher für längere Zeit ungenutzt auf diesem maximalen Ladezustand gehalten werden muss. Ein derartiges unnötig langes Halten des elektrischen Energiespeichers auf seinem Maximalladungszustand hat sich als nachteilig für dessen Lebensdauer herausgestellt. Durch den Einsatz des erfindungsgemäßen Verfahrens kann daher ein Aufladen des elektrischen Energiespeichers auf seinen maximalen Ladungszustand bzw. auf einem zweiten Ladungszustand, der zumindest in der Nähe des Maximalladungszustandes des elektrischen Energiespeichers liegt, zu einem späteren Zeitpunkt ermöglicht werden. Dieser spätere Zeitpunkt ist insbesondere bevorzugt zeitlich nah an einem Beginn einer Benutzung des elektrischen Energiespeichers angeordnet. Der elektrische Energiespeicher wird somit bei Verwendung eines erfindungsgemäßen Verfahrens weniger lang auf einem hohen Ladezustand gehalten, wodurch insgesamt seine Lebensdauer erhöht werden kann. Auch dadurch können durch den Einsatz eines erfindungsgemäßen Verfahrens Kosten reduziert werden.

Bevorzugt kann bei einem erfindungsgemäßen Verfahren vorgesehen sein, dass in Schritt a) der elektrische Energiespeicher auf einen ersten Ladezustand geladen wird, der zumindest 70%, bevorzugt zwischen 80% und 90%, einer Maximalladung des elektrischen Energiespeichers entspricht und/oder dass in Schritt c) der elektrische Energiespeicher auf einen zweiten Ladezustand geladen wird, der zumindest 95% einer Maximalladung des elektrischen Energiespeichers entspricht. Auf diese Weise kann insbesondere bereitgestellt werden, dass ein Großteil des Aufladens des elektrischen Energiespeichers während der ersten Ladedauer durchgeführt wird. Ein besonders schnelles Aufladen in Schritt c) auf den zweiten Ladungszustand kann dadurch bereitgestellt werden. Insbesondere kann der zweite Ladungszustand zumindest 95% einer Maximalladung des elektrischen Energiespeichers entsprechen. Ein zumindest im Wesentlichen beinahe vollgeladener Energiespeicher kann somit nach Durchführung eines erfindungsgemäßen Verfahrens bereitgestellt werden.

Besonders bevorzugt kann ein erfindungsgemäßes Verfahren dahingehend weiterentwickelt sein, dass in Schritt c) der elektrische Energiespeicher auf einen zweiten Ladezustand geladen wird, der 100% oder zumindest im Wesentlichen 100% einer Maximalladung eines elektrischen Energiespeichers entspricht. Auf diese Weise kann bei Durchführung eines erfindungsgemäßen Verfahrens nach Abschluss des Schrittes c) ein elektrischer Energiespeicher bereitgestellt werden, der vollständig oder zumindest im Wesentlichen vollständig geladen ist. Da das Aufladen auf eben diesen zweiten Ladezustand in einem getrennten, eigenen Schritt des erfindungsgemäßen Verfahrens durchgeführt wird, kann dieser Aufladevorgang auf die Maximalladung besonders spät und insbesondere nah an einem Beginn einer Benutzung des elektrischen Energiespeichers durchgeführt werden. Ein Zeitraum, in dem der elektrische Energiespeicher ohne Benutzung in seinem Maximalladezustand gehalten wird, kann auf diese Weise minimiert werden. Eine Erhöhung einer Lebensdauer des elektrischen Energiespeichers kann dadurch, wie oben bereits beschrieben, bereitgestellt werden.

Darüber hinaus kann beim erfindungsgemäßen Verfahren vorgesehen sein, dass die erste Ladeleistung kleiner ist als die zweite Ladeleistung. Eine Ladeleistung entspricht im Sinne der Erfindung, wie oben bereits beschrieben, der elektrischen Energie, mit der der elektrische Energiespeicher pro Zeiteinheit aufgeladen wird. Durch eine geringere Ladeleistung wird der elektrische Energiespeicher auch weniger beansprucht. Da wie oben bereits beschrieben der erste Ladezustand bevorzugt zwischen 80% und 90% einer Maximalladung des elektrischen Energiespeichers beträgt, kann somit der Großteil des Aufladens des elektrischen Energiespeichers mit eben einer geringeren Ladeleistung durchgeführt werden, wodurch die gesamte Beanspruchung des elektrischen Energiespeichers beim Aufladen weiter verringert werden kann. Auch kann die in Schritt c) durchgeführte Aufladung des elektrischen Energiespeichers auf seinen zweiten Ladezustand durch den Einsatz einer höheren Ladeleistung besonders schnell durchgeführt werden. Auch dies kann zur Steigerung eines Komforts für den Benutzer eines elektrischen Energiespeichers beitragen, da eine Wartezeit auf einen vollständig geladenen elektrischen Energiespeicher nach einer durch einen Benutzer ausgelösten Durchführung eines Schrittes c) eines erfindungsgemäßen Verfahrens besonders kurz ausgebildet ist.

Auch kann ein erfindungsgemäßes Verfahren dahingehend ausgebildet sein, dass die erste Ladedauer und/oder die zweite Ladedauer und/oder die Ladepause durch eine Benutzereingabe und/oder eine Kontrolleinheit der Ladeeinheit festgelegt werden. Insbesondere können die erste Ladedauer, die zweite Ladedauer und/oder die Ladepause variabel und insbesondere bedarfsgerecht eingestellt werden. Eine Benutzereingabe im Sinne der Erfindung kann bspw. durch eine Taste, eine Tastatur und/oder ein Touchpad durch den Benutzer durchgeführt werden. Eine Festlegung durch die Kontrolleinheit im Sinne der Erfindung kann bspw. auf einer Uhrzeit basierend ausgelöst werden.

Gemäß einer Weiterentwicklung eines erfindungsgemäßen Verfahrens kann ferner vorgesehen sein, dass für die Festlegung der ersten Ladedauer und/oder der zweiten Ladedauer und/oder der Ladepause durch die Ladeeinheit ein Benutzerverhalten ausgewertet wird. Diese Auswertung kann insbesondere wiederum durch die Kontrolleinheit der Ladeinheit durchgeführt werden. So kann bspw. bei einem elektrischen Energiespeicher, der in einem Fahrzeug verbaut ist, von der Ladeeinheit und insbesondere der Kontrolleinheit der Ladeeinheit erkannt und ausgewertet werden, zu welchen Zeiten das Fahrzeug durch den Benutzer üblicherweise verwendet wird. Als Beispiel sei hier ein Benutzer genannt, der mit dem Fahrzeug zur Arbeit fährt und somit an einem Werktag zumindest im Wesentlichen einen stets gleichen Betriebsstart des Fahrzeuges und damit des elektrischen Energiespeichers auslösen wird. In diesem Fall kann insbesondere bspw. die zweite Ladedauer derart festgelegt werden, dass der elektrische Energiespeicher genau dann durch Beendigung des Schrittes c) eines erfindungsgemäßen Verfahrens vollgeladen ist, wenn eben dieser Betriebsstart kurz bevorsteht. Eine möglichst kurze Standzeit des elektrischen Energiespeichers auf Maximalladung kann dadurch bereitgestellt werden.

Darüber hinaus kann ein erfindungsgemäßes Verfahren dahingehend weiterentwickelt sein, dass für die Festlegung der ersten Ladedauer und/oder der zweiten Ladedauer und/oder der Ladepause ein Beginn und/oder ein Ende der jeweiligen Zeitspanne festgelegen werden. Durch ein Festlegen eines Beginns bzw. eines Endes einer Zeitspanne kann diese Zeitspanne besonders einfach definiert werden. Ein Beginn der Zeitspanne definiert insbesondere, wann und zu welchem Zeitpunkt die jeweilige Aufladung bzw. das Passieren der Aufladung beginnen darf. Bspw. bei Ausnutzung eines besonders niedrigen Energiepreises, der während eines Zeitfensters angeboten wird, kann der Beginn der ersten Ladedauer bevorzugt ab dem Beginn dieses Zeitfensters gelegt werden. Ein Ende der jeweiligen Zeitspanne bedeutet im Sinne der Erfindung insbesondere, wann und zu welchem Zeitpunkt die jeweilige Ladephase bzw. Ladepause beendet sein soll. Um beim o. g. Beispiel zu bleiben, kann bspw. ein Ende der ersten Ladepause dahingehend festgelegt werden, dass dieses mit dem Ende des Zeitfensters von günstigen Energiepreisen zusammenfällt. Auch durch dieses Festlegen eines Beginns bzw. eines Endes der Zeitspanne kann somit die Variabilität bei der Durchführung eines erfindungsgemäßen Verfahrens weiter gesteigert werden.

Auch kann es im Rahmen der Erfindung vorgesehen sein, dass ein Ende der zweiten Ladedauer derart festgelegt wird, dass eine Benutzung des elektrischen Energiespeichers nach Ende oder zumindest im Wesentlichen nach Ende der zweiten Ladedauer begonnen wird. Auf diese Weise kann sichergestellt werden, dass der elektrische Energiespeicher nur für kurze Zeit in einem Zustand seiner Maximal-Leistung verbleiben muss. Eine Beeinträchtigung einer Lebensdauer des elektrischen Energiespeichers kann dadurch minimiert werden. Des Weiteren kann durch diese kurz vor Beginn einer Benutzung des elektrischen Energiespeichers durchgeführten Aufladung ausgenutzt werden, dass sich bei diesem Aufladen der elektrische Energiespeicher zumeist erwärmt. Insbesondere moderne elektrische Energiespeicher, bspw. PLIT Energiespeicher, benötigen für einen sicheren und effizienten Betrieb eine gewisse Betriebstemperatur. Durch ein erfindungsgemäßes Verfahren kann diese Betriebstemperatur bereits durch die kurz vor Beginn der Benutzung des elektrischen Energiespeichers durchgeführte Aufladung bereitgestellt werden. Ein zusätzliches Aufheizten des elektrischen Energiespeichers für eine Benutzung des elektrischen Energiespeichers kann somit entfallen oder zumindest wesentlich geringer dimensioniert werden. Eine weitere Einsparung von Kosten kann somit bereitgestellt werden.

Ebenfalls Gegenstand der Erfindung ist eine Ladeeinheit zum Laden eines elektrischen Energiespeichers, aufweisend eine Speichereinheit und eine Kontrolleinheit. Eine erfindungsgemäße Ladeeinheit ist dadurch gekennzeichnet, dass in der Speichereinheit ein Verfahren gemäß dem ersten Aspekt der Erfindung gespeichert ist und dass die Kontrolleinheit zum Ausführen eines Verfahrens gemäß dem ersten Aspekt der Erfindung ausgebildet ist. Damit bringt eine erfindungsgemäße Ladeeinheit die gleichen Vorteile mit sich, wie sie ausführlich mit Bezug auf ein erfindungsgemäßes Verfahren gemäß dem ersten Aspekt der Erfindung beschrieben worden sind.

Ferner kann bei einer erfindungsgemäßen Ladeeinheit vorgesehen sein, dass die Ladeeinheit für einen Einsatz in einem Fahrzeug verwendbar ist. Gemäß dieser besonders bevorzugten Ausgestaltung einer erfindungsgemäßen Ladeeinheit kann somit bspw. ermöglicht werden, das Fahrzeug bzw. den elektrischen Energiespeicher des Fahrzeuges während einer nächtlichen Ruhephase des Fahrzeuges im Schritt a) eines erfindungsgemäßen Verfahrens während der ersten Ladedauer auf einen ersten Ladezustand aufzuladen und dann eine Ladepause einzulegen. Ferner kann kurz vor einem erwarteten Betriebsstart des Fahrzeugs, bspw. ein regelmäßiger Betriebsstart während eines Werktages, durch Durchführung des Schrittes c) eines erfindungsgemäßen Verfahrens der elektrische Energiespeicher auf einen zweiten Ladezustand, der insbesondere der Maximalladung des elektrischen Energiespeichers entsprechen kann, aufgeladen werden. Ein besonders kostensparender und gleichzeitig für den elektrischen Energiespeicher schonender Ladevorgang kann somit durch eine derartig ausgebildete, erfindungsgemäße Ladeeinheit bereitgestellt werden.

Darüber hinaus ist Gegenstand der vorliegenden Erfindung ein System, aufweisend zumindest einen elektrischen Energiespeicher und eine Ladeeinheit gemäß dem zweiten Aspekt der Erfindung. Auch ein erfindungsgemäßes System weist somit dieselben Vorteile auf, wie sie bereits ausführlich in Bezug auf eine erfindungsgemäße Ladeeinheit gemäß dem zweiten Aspekt der Erfindung und selbstverständlich auch in Bezug auf ein Verfahren gemäß dem ersten Aspekt der Erfindung beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen geschrieben sind. Dabei können die in den Ansprüchen und in der Beschreibung erwähnten Merkmale jeweils einzeln für sich oder in beliebiger Kombination erfindungswesentlich sein.

### Figurenbeschreibung

Es zeigen:
- Figur 1: die Schritte eines erfindungsgemäßen Verfahrens anhand eines Ladezustands eines elektrischen Energiespeichers, und
- Figur 2: eine erfindungsgemäße Ladeeinheit.

In den Figuren werden für die gleichen technischen Merkmale identische Bezugszeichen verwendet.

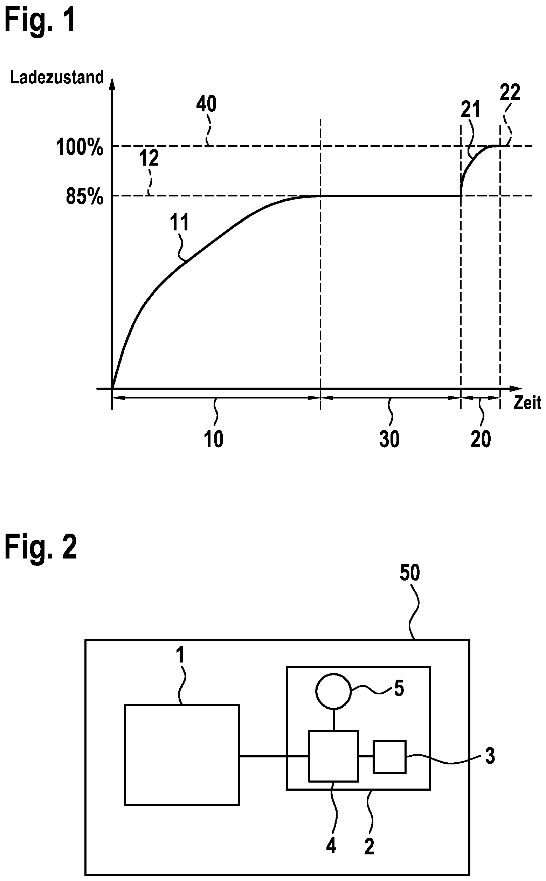

Fig. 1 zeigt einen zeitlichen Verlauf eines Ladezustandes 12, 22 eines elektrischen Energiespeichers 1 während der Durchführung eines erfindungsgemäßen Verfahrens durch eine erfindungsgemäße Ladeeinheit 2. Eine erfindungsgemäße Ladeeinheit 2 ist in Fig. 2 gezeigt. Die beiden Figuren werden daher im Folgenden gemeinsam beschrieben.

Durch ein erfindungsgemäßes Verfahren kann ein elektrischer Energiespeicher 1 durch eine erfindungsgemäße Ladeeinheit 2 aufgeladen werden. Eine erfindungsgemäße Ladeeinheit 2 weist insbesondere eine Speichereinheit 3 auf, in der ein erfindungsgemäßes Verfahren hinterlegt ist. Eine Kontrolleinheit 4 der erfindungsgemäßen Ladeeinheit 2 ist zum Auslesen der Speichereinheit 3 und zum Ausführen des erfindungsgemäßen Verfahrens ausgebildet. Weitere Bestandteile einer erfindungsgemäßen Ladeeinheit 2, beispielsweise eine Ladestromzuführung, sind nicht mit abgebildet. Der elektrische Energiespeicher 1 und die erfindungsgemäße Ladeeinheit 2 bilden ein System 50. Besonders bevorzugt kann ein derartiges System 50 in einem Fahrzeug, insbesondere einem Kraftfahrzeug, verbaut sein.

In einem ersten Schritt a) eines erfindungsgemäßen Verfahrens wird der elektrische Energiespeicher 1 durch die erfindungsgemäße Ladeeinheit 2 während einer ersten Ladedauer 10 auf einen ersten Ladezustand 12 aufgeladen. Für dieses Aufladen wird insbesondere eine erste Ladeleistung 11 verwendet. Der erste Ladezustand 12 kann bevorzugt zwischen 80% und 90% einer Maximalladung 40 des elektrischen Energiespeichers sein. Die erste Ladedauer 10 kann bspw. durch Festlegung ihres Beginns bzw. ihres Endes derart eingestellt werden, dass sie zu einem Zeitpunkt erfolgt, in dem niedrige Energiepreise vorherrschen. Auch kann die erste Ladeleistung 11 niedrig angesetzt sein, da die erste Ladedauer 10 sich auch über längere Zeitdauer erstrecken kann. Der Beginn bzw. das Ende der ersten Ladedauer 10 bzw. die Länge der ersten Ladedauer 10 kann bspw. durch die Kontrolleinheit 4 oder durch eine direkte Benutzereingabe 5 durch den Benutzer selbst festgelegt werden. Im Anschluss an die erste Ladedauer 10 erfolgt in einem zweiten Schritt b) eines erfindungsgemäßen Verfahrens eine Ladepause 30, in der keine Aufladung des elektrischen Energiespeichers 1 durch die erfindungsgemäße Ladeeinheit 2 erfolgt. Nach Ablauf der Ladepause 30, erfolgt gemäß einem Schritt c) eines erfindungsgemäßen Verfahrens eine weitere Aufladung des elektrischen Energiespeichers 1, nun auf einen zweiten Ladezustand 22, der insbesondere bevorzugt der Maximalladung 40 des elektrischen Energiespeichers 1 entsprechen kann. Diese weitere Aufladung des elektrischen Energiespeichers erfolgt während einer zweiten Ladedauer 20 und mit einer zweiten Ladeleistung 21. Die zweite Ladedauer 20 kann insbesondere kurz und die zweite Ladeleistung 21 bevorzugt deutlich höher als die erste Ladeleistung 11 gewählt werden. Ein besonders schnelles Aufladen des elektrischen Energiespeichers 1 auf seinen zweiten Ladezustand 22 kann dadurch bereitgestellt werden. Insbesondere kann besonders bevorzugt das Ende der zweiten Ladedauer 20 derart festgelegt werden, dass dieses möglichst nah an einem Beginn einer Benutzung des elektrischen Energiespeichers 1 lokalisiert ist. Auf diese Weise kann sichergestellt werden, dass der elektrische Energiespeicher 1 nur für kurze Zeit auf seiner Maximalladung 40 gehalten werden muss. Eine Beeinträchtigung einer Lebensdauer des elektrischen Energiespeichers 1 kann dadurch minimiert werden. Ferner kann ausgenutzt werden, dass sich beim schnellen Aufladen während der zweiten Ladedauer 20 der elektrische Energiespeicher 1 erwärmt. Insbesondere bei elektrischen Energiespeichern 1, die für einen sicheren Betrieb eine gewisse Betriebstemperatur benötigen, kann dies von Vorteil sein. Ein zusätzliches Aufheizten eines derartigen elektrischen Energiespeichers 1 auf dessen Betriebstemperatur kann dadurch bereits durch das Erwärmen des elektrischen Energiespeichers 1 beim Aufladen während der zweiten Ladedauer 20 bereitgestellt werden. Zusammenfassend kann somit insgesamt durch ein erfindungsgemäßes Verfahren bzw. eine erfindungsgemäße Ladeeinheit 2 ein Aufladen eines elektrischen Energiespeichers 1 verbessert werden. Insbesondere können eine Kostenreduktion durch Ausnutzen von besonders niedrigen Energiepreisen sowie eine Steigerung einer Lebensdauer des elektrischen Energiespeichers 1 durch eine Verminderung der Zeiten des elektrischen Energiespeichers 1 auf Maximalladung 40 ermöglicht werden. Auch ein Ausnutzen einer Erwärmung des elektrischen Energiespeichers 1 durch ein Aufladen auf den zweiten Ladezustand 22 durch eine entsprechende Festlegung der zweiten Ladedauer 20, kann eine Kosteneinsparung bereitstellen.

## Patentansprüche

1. Verfahren zum Laden eines elektrischen Energiespeichers (1),
**gekennzeichnet durch** folgende Schritte:
a) Laden des elektrischen Energiespeichers (1) durch eine Ladeeinheit (2) während einer ersten Ladedauer (10) mit einer ersten Ladeleistung (11) auf einen ersten Ladezustand (12),
b) Unterbrechen des Ladens des elektrischen Energiespeichers (1) durch die Ladeeinheit (2) nach der ersten Ladedauer (10) für eine Ladepause (30), und
c) Laden des elektrischen Energiespeichers (1) nach der Ladepause (30) durch die Ladeeinheit (2) während einer zweiten Ladedauer (20) mit einer zweiten Ladeleistung (21) auf einen zweiten Ladezustand (22).

2. Verfahren nach Anspruch 1,
**dadurch gekennzeichnet,**
**dass** in Schritt a) der elektrische Energiespeicher (1) auf einen ersten Ladezustand (12) geladen wird, der zumindest 70%, bevorzugt zwischen 80% und 90%, einer Maximalladung (40) des elektrischen Energiespeichers (1) entspricht und/oder dass in Schritt c) der elektrische Energiespeicher (1) auf einen zweiten Ladezustand (22) geladen wird, der zumindest 95% einer Maximalladung (40) des elektrischen Energiespeichers (1) entspricht.

3. Verfahren nach Anspruch 1 oder 2,
**dadurch gekennzeichnet,**
**dass** in Schritt c) der elektrische Energiespeicher (1) auf einen zweiten Ladezustand (22) geladen wird, der 100% oder zumindest im Wesentlichen 100% einer Maximalladung (40) des elektrischen Energiespeichers (1) entspricht.

4. Verfahren nach einem der vorangegangenen Ansprüche,
**dadurch gekennzeichnet,**
**dass** die erste Ladeleistung (11) kleiner ist als die zweite Ladeleistung (21).

5. Verfahren nach einem der vorangegangenen Ansprüche,
**dadurch gekennzeichnet,**
**dass** die erste Ladedauer (10) und/oder die zweite Ladedauer (20) und/oder die Ladepause (30) durch eine Benutzereingabe (5) und/oder durch eine Kontrolleinheit (4) der Ladeeinheit (2) festgelegt werden.

6. Verfahren nach Anspruch 5,
**dadurch gekennzeichnet,**
**dass** für die Festlegung der ersten Ladedauer (10) und/oder der zweiten Ladedauer (20) und/oder der Ladepause (30) durch die Ladeeinheit (2) ein Benutzerverhalten ausgewertet wird.

7. Verfahren nach Anspruch 5 oder 6,
**dadurch gekennzeichnet,**
**dass** für die Festlegung der ersten Ladedauer (10) und/oder der zweiten Ladedauer (20) und/oder der Ladepause (30) ein Beginn und/oder ein Ende der jeweiligen Zeitspanne festgelegt werden.

8. Verfahren nach Anspruch 7,
**dadurch gekennzeichnet,**
**dass** ein Ende der zweiten Ladedauer (20) derart festgelegt wird, dass eine Benutzung des elektrischen Energiespeichers (1) nach Ende oder zumindest im Wesentlichen nach Ende der zweiten Ladedauer (20) begonnen wird.

9. Ladeeinheit (2) zum Laden eines elektrischen Energiespeichers (1), aufweisend eine Speichereinheit (3) und eine Kontrolleinheit (4),
**dadurch gekennzeichnet,**
**dass** in der Speichereinheit (3) ein Verfahren nach einem der vorangegangenen Ansprüche gespeichert ist und dass die Kontrolleinheit (4) zum Ausführen eines Verfahrens nach einem der vorangegangenen Ansprüche ausgebildet ist.

10. Ladeeinheit (2) nach Anspruch 9,
**dadurch gekennzeichnet,**
**dass** die Ladeeinheit (2) für einen Einsatz in einem Fahrzeug verwendbar ist.
